Europäisches Patentamt

European Patent Office

Office européen des brevets

(11) Numéro de publication: **0 203 022**
**A2**

## (12) DEMANDE DE BREVET EUROPEEN

(21) Numéro de dépôt: **86440036.1**

(22) Date de dépôt: **13.05.86**

(51) Int. Cl.4: **B62D 1/26**

(30) Priorité: **13.05.85 FR 8507337**

(43) Date de publication de la demande:
**26.11.86 Bulletin 86/48**

(84) Etats contractants désignés:
**AT BE CH DE GB IT LI LU NL SE**

(71) Demandeur: **CHAMPENOIS, S.A.**
**Chamouilley**
**F-52410 Eurville(FR)**

(72) Inventeur: **Groud, Laurent**
**9 avenue de la Marne**
**Hallignicourt F-52100 Saint Dizier(FR)**

(74) Mandataire: **Nuss, Pierre**
**10, rue Jacques Kablé**
**F-67000 Strasbourg(FR)**

(54) **Dispositif de guidage de véhicules comportant des outils en porte-à-faux avant ou arrière et travaillant en position frontale.**

(57) La présente invention concerne un dispositif de guidage de véhicules comportant des outils en porte-à-faux avant ou arrière et travaillant en position frontale.

Dispositif caractérisé en ce qu'il est muni d'un organe (1) de liaison directe entre la partie active (2, 3) et le mécanisme de direction (4) du véhicule (5).

Fig-1

EP 0 203 022 A2

# Dispositif de guidage de véhicules comportant des outils en porte-à-faux avant ou arrière et travaillant en position frontale

La présente invention concerne le domaine de la construction de véhicules munis d'outils en porte-à-faux avant ou arrière, en particulier les balayeuses de voirie, les tondeuses, les aspirateurs de déchets, le matériel de récolte, le matériel de déneigement, le matériel de travail du sol, le matériel de marquage des sols, le matériel de pulvérisation, les laveuses de sol et le matériel d'épandage de liquides ou de solides.

Actuellement, les matériels existants sont généralement pourvus d'outils fixés au châssis en position frontale, qui ne permettent pas une maniabilité suffisante de la partie active de l'engin.

Afin d'obvier à cet inconvénient, il a été proposé de réaliser des outils pouvant être déportés latéralement par le conducteur, indépendamment de la direction de déplacement. Cependant, un tel mode de réalisation présente l'inconvénient de mobiliser une grande part de l'attention du conducteur pour le maniement de l'outil, au détriment de la conduite et de ralentir ainsi la vitesse de travail.

La présente invention a pour but de pallier ces inconvénients.

Elle a, en effet, pour objet un dispositif de guidage de véhicules comportant des outils en porte-à-faux avant ou arrière et travaillant en position frontale, caractérisé en ce qu'il est muni d'un organe de liaison directe entre la partie active et le mécanisme de direction du véhicule.

L'invention sera mieux comprise grâce à la description ci-après, qui se rapporte à un mode de réalisation préféré, donné à titre d'exemple non limitatif, et expliqué avec référence aux dessins - schématiques annexés, dans lesquels:

la figure 1 est une vue en plan d'un véhicule équipé du dispositif conforme à l'invention, et

la figure 2 est une vue en plan du véhicule mettant en évidence les trajectoires des outils.

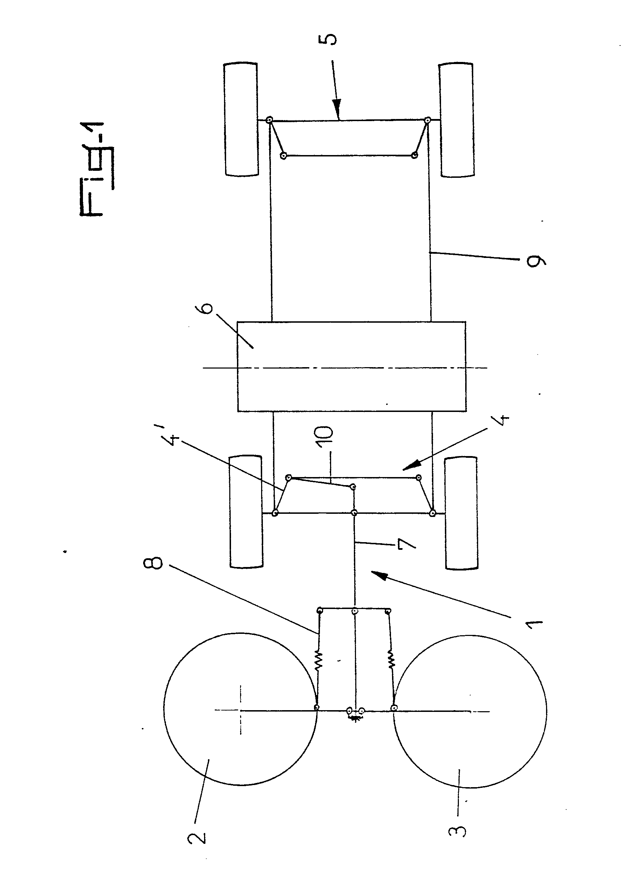

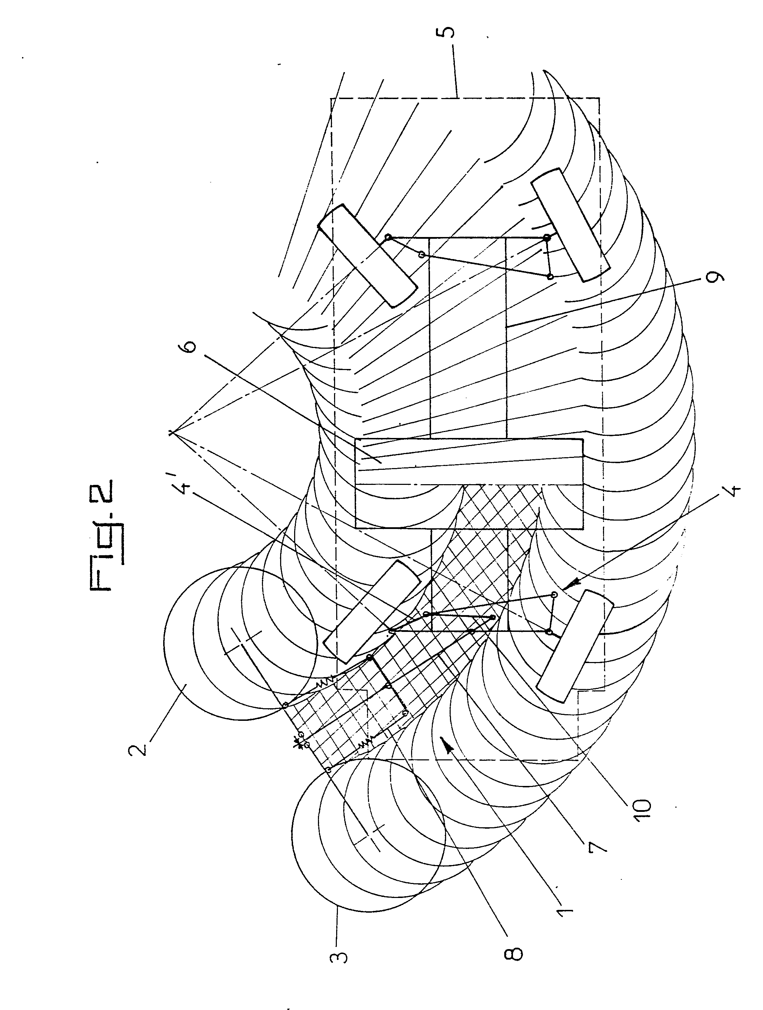

Conformément à l'invention, et comme le montrent les figures 1 et 2 des dessins annexés, le dispositif de guidage de véhicules comportant des outils en porte-à-faux avant ou arrière et travaillant en position frontale est caractérisé en ce qu'il est muni d'un organe 1 de liaison directe entre la partie active 2, 3 et le mécanisme de direction 4 du véhicule 5.

Cet organe 1 est destiné à permettre une anticipation du mouvement latéral dans les courbes et à faciliter la conduite du véhicule 5 avec manoeuvre simultanée de la partie active 2, 3.

La partie active 2, 3 est constituée de manière connue par des outils en position frontale, un outil 6 analogue ou différent pouvant être monté sous le véhicule 5.

Les outils formant la partie active 2, 3 ainsi que l'outil 6 peuvent être de tous types, à savoir des brosses d'axe vertical et une brosse d'axe horizontal, celle-ci pouvant être remplacée par une buse d'aspiration ramassant les déchets rassemblés par les brosses frontales, soit des éléments de tondeuse à hélice ou à lames hélicoïdales, soit uniquement des buses d'aspiration, soit encore sous forme de rampes de distribution de produits liquides ou pulvérulents.

Les outils 2 et 3 peuvent également être constitués par un dispositif de déneigement du type lame à neige, ou par un dispositif de pulvérisation de peinture de marquage de sol pour application à froid ou pour application et réticulation à chaud, ou encore par un dispositif de décapage de peinture de marquage de sol.

Enfin, les outils 2, 3 et 6 peuvent également être sous forme de dispositifs de déneigement de type fraise à neige.

L'organe 1 est essentiellement constitué par un bras 7 solidaire à une extrémité du châssis 8 de support de la partie active 2, 3, articulé sur le châssis 9 du véhicule 5 et relié par son autre extrémité au moyen d'une bielle 10, et/ou d'un dispositif hydraulique, électromécanique, ou électronique, au mécanisme de direction 4, de préférence à la rotule d'une biellette de direction 4'.

Ainsi, lors d'un changement de direction, le bras 7 est basculé autour de son point d'articulation sur le châssis 9 de telle manière que la partie active 2, 3 suit exactement une trajectoire concentrique à celle des roues du véhicule 5, comme le montre la figure 2. En outre, du fait de cette trajectoire, l'outil supplémentaire 6 est parfaitement adapté à couvrir la zone qui n'est pas travaillée par les outils 2, 3 de la partie active, même dans les courbes.

Grâce à l'invention, il est possible de réaliser des véhicules comportant des outils en porte-à-faux avant ou arrière parfaitement maniables et ne nécessitant pas une surveillance constante des parties actives au détriment de la conduite. En outre, le guidage des parties en porte-à-faux de manière synchronisée avec les roues du véhicule permet une couverture parfaite des zones à travailler.

Bien entendu, l'invention n'est pas limitée au mode de réalisation décrit et représenté aux dessins annexés. Des modifications restent possibles, notamment du point de vue de la constitution des divers éléments, ou par substitution d'équivalents techniques, sans sortir pour autant du domaine de protection de l'invention.

**Revendications**

1. Dispositif de guidage de véhicules comportant des outils en porte-à-faux avant ou arrière et travaillant en position frontale, caractérisé en ce qu'il est muni d'un organe (1) de liaison directe entre la partie active (2, 3) et le mécanisme de direction - (4) du véhicule (5).

2. Dispositif, suivant la revendication 1, caractérisé en ce que l'organe (1) est essentiellement constitué par un bras (7) solidaire à une extrémité du châssis (8) de support de la partie active (2, 3), articulé sur le châssis (9) du véhicule (5) et relié par son autre extrémité au moyen d'une bielle (10) et/ou d'un dispositif hydraulique, électromécanique ou électronique, au mécanisme de direction (4), de préférence à la rotule d'une biellette de direction - (4').

Fig-1

0 203 022

Fig. 2

0 203 022